# EUROPÄISCHE PATENTSCHRIFT

(11) **EP 3 282 827 B1**
(45) Veröffentlichungstag und Bekanntmachung des Hinweises auf die Patenterteilung: **17.04.2019**
(21) Anmeldenummer: 16713323.0
(22) Anmeldetag: 16.03.2016
(51) Int. Cl.: A01D 34/82, B62B 5/06, F16C 11/10, B62B 7/06

(54) **GELENKVERBINDUNG ZUM VERBINDEN WENIGSTENS EINES LANGGESTRECKTEN GEGENSTANDES**
ARTICULATED CONNECTION FOR CONNECTING AT LEAST ONE ELONGATED OBJECT
ARTICULATION PERMETTANT LE RACCORDEMENT D'AU MOINS UN OBJET ALLONGÉ

(30) Priorität: 16.04.2015 DE 102015105837
(43) Veröffentlichungstag der Anmeldung: 21.02.2018
(73) Patentinhaber: HUSQVARNA AB, 561 82 Huskvarna (SE)
(72) Erfinder: STRAZZERI, Sandro, 89073 Ulm (DE); HECKENBERGER, Bernd, 88477 Schönebürg (DE)
(86) Internationale Anmeldenummer: PCT/EP2016/055660
(87) Internationale Veröffentlichungsnummer: WO 2016/165899

(56) Entgegenhaltungen:
- DE-A1- 2 658 838
- DE-A1-102014 109 500
- DE-U1- 20 007 948
- DE-U1- 29 904 833
- US-A- 5 062 179
- US-A1- 2008 109 994

## Beschreibung

Die Erfindung betrifft eine Gelenkverbindung zum drehbaren und feststellbaren Verbinden wenigstens eines langgestreckten Gegenstandes, insbesondere für ein handführbares Gerät oder Kleinfahrzeug. Dabei ist der langgestreckte Gegenstand bezüglich mehrerer vorbestimmter Winkel feststellbar. Weiterhin betrifft die Erfindung eine Führungsvorrichtung für ein handführbares Gerät oder Kleinfahrzeug mit wenigstens einem langgestreckten Gegenstand und wenigstens einer Gelenkverbindung. Außerdem betrifft die Erfindung ein handführbares Gerät mit wenigstens einem langgestreckten Gegenstand und wenigstens einer Gelenkverbindung. Schließlich betrifft die Erfindung ein handführbares Kleinfahrzeug mit wenigstens einem langgestreckten Gegenstand und wenigstens einer Gelenkverbindung.

Für handführbare Geräte und Kleinfahrzeuge werden üblicherweise Führungsvorrichtungen verwendet, die einen oder mehrere langgestreckte Gegenstände, wie Stangen, Rohre oder Stäbe aufweisen, die mit einer Gelenkverbindung gekoppelt sind. Dabei ist der Winkel der Stange, des Rohres oder des Stabes einstellbar und feststellbar. Derartige Gelenkverbindungen sind jedoch meist aufwändig konzipiert. Oftmals ist für den Benutzer das Verstellen und Feststellen der Gelenkverbindung schwierig.

Die Druckschrift DE 10 2014 109 500 A1 beschreibt eine Verbindungsvorrichtung mit einem ersten Montagesitz, einem zweiten Montagesitz, einem Riegelelement und einer Rückhalteeinheit. Der zweite Montagesitz ist mit dem ersten Montagesitz verbunden und in Bezug auf diesen drehbar. Das Riegelelement ist zwischen einer Verriegelungsposition und einer Entriegelungsposition beweglich, um die Drehung des zweiten Montagesitzes in Bezug auf den ersten Montagesitz zu steuern. Die Rückhalteeinheit ist ausgelegt um das Riegelelement an der Entriegelungsposition als Reaktion auf die Bewegung des Riegelelements von der Verriegelungsposition zu der Entriegelungsposition zu halten.

Das Dokument DE 200 07 948 U1 beschreibt ein Drehgelenk mit Rastkupplung zum schwenkbeweglichen Verbinden mindestens zweier zu einander verstellbarer Teile. Dieses Drehgelenk weist auf mindestens ein erstes Drehgelenkelement, wenigstens ein zweites Drehgelenkelement, wobei beide Drehgelenkelemente miteinander und relativ gegeneinander verdrehbar verbunden sind.

Der Erfindung liegt daher die Aufgabe zugrunde, eine Gelenkverbindung bereit zu stellen, die einen einfachen konstruktiven Aufbau aufweist und bei der der Winkel auf einfache Weise einstellbar ist.

Diese Aufgabe wird durch die Gelenkverbindung gemäß Patentanspruch 1 gelöst.

Erfindungsgemäß ist eine Gelenkverbindung zum drehbaren und feststellbaren Verbinden wenigstens eines langgestreckten Gegenstandes, insbesondere für ein handführbares Gerät oder Kleinfahrzeug vorgesehen, wobei die Gelenkverbindung Folgendes aufweist:
- ein erstes Gelenkteil, das eine erste Halbschale umfasst, wobei in der ersten Halbschale ein erstes Innenzahnrad ausgebildet ist,
- ein zweites Gelenkteil, das eine zweite Halbschale und eine Muffe umfasst, wobei in der zweiten Halbschale ein zweites Innenzahnrad ausgebildet ist, und wobei die Muffe zum Aufnehmen des langgestreckten Gegenstandes vorgesehen ist,
- ein Zahnrad, das komplementär zum ersten Innenzahnrad und zum zweiten Innenzahnrad ausgebildet und innerhalb der beiden zusammengefügten Halbschalen angeordnet ist,
- einen Drehknopf, der in oder an einer Außenseite der zweiten Halbschale angeordnet und um eine Achse drehbar und entlang dieser Achse verschiebbar ist,
- eine erste Schraubenfeder, die zwischen der ersten Halbschale und dem Zahnrad angeordnet ist und das Zahnrad entlang der Achse gegen das zweite Innenzahnrad drückt,
- eine zweite Schraubenfeder, die zwischen der zweiten Halbschale und dem Drehknopf angeordnet ist und der Verschiebung des Drehknopfes entlang der Achse in die Ausnehmung entgegenwirkt, und
- Verbindungsmittel, welche die erste Halbschale, die erste Schraubenfeder, das Zahnrad und die zweite Halbschale entlang der Achse miteinander verbinden, wobei
- in einem arretierten Zustand das Zahnrad mit dem ersten Innenzahnrad und mit dem zweiten Innenzahnrad in Eingriff ist, so dass das erste Gelenkteil und das zweite Gelenkteil fest miteinander verbunden sind, und wobei
- in einem entarretierten Zustand das Zahnrad mit dem ersten Innenzahnrad in Eingriff und vom zweiten Innenzahnrad entkoppelt ist, so dass das erste Gelenkteil und das zweite Gelenkteil relativ zueinander drehbar sind.

Die Hauptidee der Erfindung liegt darin, dass einerseits zwischen den beiden Halbschalen das Zahnrad elastisch verschiebbar entlang der Achse angeordnet ist und andererseits der Drehknopf zum Verschieben des Zahnrades in oder an der Außenseite der zweiten Halbschale entlang der Achse ebenfalls elastisch verschiebbar ist, wobei das Zahnrad und der Drehknopf unabhängig voneinander befestigt sind. Dem Zahnrad und dem Drehknopf ist jeweils eine separate Schraubenfeder zugeordnet. Durch die besondere Anordnung der einzelnen Komponenten werden nur wenige Befestigungsmittel benötigt, so dass der konstruktive Aufwand für die Gelenkverbindung relativ gering ist.

Beispielsweise umfassen die Verbindungsmittel einen Bolzen oder eine Schraube, einen Sicherungsring und/oder wenigstens eine Beilagscheibe. Dies trägt zu einem geringen konstruktiven Aufwand bei.

Vorzugsweise ist durch die Zähnungen des Zahnrades, des ersten Innenzahnrades und des zweiten Innenzahnrades eine Anzahl diskreter vorbestimmter Winkel zwischen dem ersten Gelenkteil und dem zweiten Gelenkteil definiert. Dadurch haben das Zahnrad und die Innenzahnräder eine Doppelfunktion. Einerseits bewirkt der Eingriff zwischen dem Zahnrad und den Innenzahnrädern das Feststellen des ersten Gelenkteiles an dem zweiten Gelenkteil. Andererseits bestimmen die Zähnungen des Zahnrades und der Innenzahnräder die Abstände der möglichen Winkel zwischen dem ersten Gelenkteil und dem zweiten Gelenkteil.

Weiterhin kann durch die Struktur der äußeren Umfangsfläche des Zahnrades und/oder der inneren Umfangsflächen des ersten Innenzahnrades und/oder des zweiten Innenzahnrades ein vorbestimmter Winkelbereich zwischen dem ersten Gelenkteil und dem zweiten Gelenkteil definiert sein.

Bei der Erfindung ist der Drehknopf in einer Ausnehmung im zentralen Bereich der zweiten Halbschale angeordnet. Dadurch ist der Drehknopf versenkt in der Gelenkverbindung angeordnet.

In der zweiten Halbschale ist ein Gewinde oder ein Gewindeabschnitt ausgebildet, das bzw. der mit dem Drehknopf in Eingriff ist, wobei das Gewinde bzw. der Gewindeabschnitt die Verschiebung des Drehknopfes entlang der Achse aufgrund der Drehung des Drehknopfes um die Achse bewirkt.

Insbesondere ist das zweite Gelenkteil mit der zweiten Halbschale und der Muffe einstückig oder zweiteilig ausgebildet.

Vorzugsweise sind das zweite Gelenkteil, die zweite Halbschale und/oder die Muffe aus Kunststoff und/oder Metall hergestellt.

Gemäß einer Ausführungsform der Erfindung bildet bzw. bilden das erste Gelenkteil mit der ersten Halbschale und dem ersten Innenzahnrad ein oder mehrere Teile eines Gehäuses für das handführbare Gerät oder Kleinfahrzeug oder für eine Komponente des handführbaren Gerätes oder Kleinfahrzeuges. Dabei kann das Gehäuse mit dem ersten Gelenkteil, der ersten Halbschale und dem ersten Innenzahnrad einstückig oder mehrteilig ausgebildet sein, wobei vorzugsweise das Gehäuse, das erste Gelenkteil, die erste Halbschale und/oder das erste Innenzahnrad aus Kunststoff und/oder Metall hergestellt sind.

Gemäß einer anderen Ausführungsform der Erfindung umfasst das erste Gelenkteil eine weitere Muffe, die zum Aufnehmen eines weiteren langgestreckten Gegenstandes vorgesehen ist, so dass die Gelenkverbindung zum drehbaren und feststellbaren Verbinden zweier langgestreckter Gegenstände vorgesehen ist.

Dabei kann das erste Gelenkteil mit der ersten Halbschale und der weiteren Muffe einstückig oder zweiteilig ausgebildet sein, wobei vorzugsweise das erste Gelenkteil, die erste Halbschale und/oder die weitere Muffe aus Kunststoff und/oder Metall hergestellt sind.

Auch das Zahnrad und/oder der Drehknopf können aus Kunststoff und/oder Metall hergestellt sein.

Weiterhin betrifft die Erfindung eine Führungsvorrichtung für ein handführbares Gerät oder Kleinfahrzeug, die wenigstens einen langgestreckten Gegenstand aufweist, der mittels einer Gelenkverbindung verstellbar verbunden oder verbindbar ist, wobei die Führungsvorrichtung wenigstens eine oben beschriebene Gelenkverbindung aufweist.

Außerdem betrifft die Erfindung ein handführbares Gerät mit wenigstens einem langgestreckten Gegenstand, der mittels einer Gelenkverbindung verstellbar verbunden oder verbindbar ist, wobei das handführbare Gerät wenigstens eine oben beschriebene Gelenkverbindung aufweist.

Schließlich betrifft die Erfindung ein handführbares Kleinfahrzeug mit wenigstens einem langgestreckten Gegenstand, der mittels einer Gelenkverbindung verstellbar verbunden oder verbindbar ist, wobei das handführbare Gerät wenigstens eine oben beschriebene Gelenkverbindung aufweist.

Weitere Merkmale, Vorteile und besondere Ausführungsformen sind Gegenstand der Schutzansprüche.

Die Erfindung ist nachfolgend anhand eines bevorzugten Ausführungsbeispiels und unter Bezugnahme auf die Zeichnungen näher beschrieben. Es zeigen
- Figur 1: eine schematische Explosionsansicht einer Gelenkverbindung gemäß einer ersten Ausführungsform der Erfindung,
- Figur 2: eine schematische Perspektivansicht der Gelenkverbindung gemäß der ersten Ausführungsform der Erfindung,
- Figur 3: eine schematische Explosionsansicht der Gelenkverbindung gemäß einer zweiten Ausführungsform der Erfindung, und
- Figur 4: eine schematische Perspektivansicht der Gelenkverbindung gemäß der zweiten Ausführungsform der Erfindung,

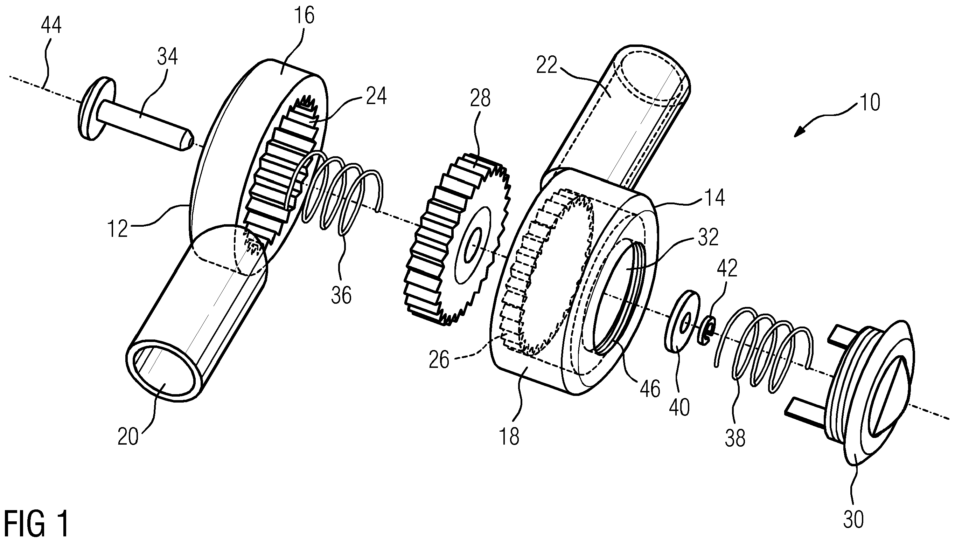

Figur 1 zeigt eine schematische Explosionsansicht einer Gelenkverbindung 10 gemäß einer ersten Ausführungsform der Erfindung. Die Gelenkverbindung 10 gemäß der ersten Ausführungsform ist als ein Verbindungsteil zwischen zwei langgestreckten Gegenständen, beispielsweise zwischen zwei Stangen, Rohren oder Stäben vorgesehen. Insbesondere ist die Gelenkverbindung 10 für eine Führungsvorrichtung eines handführbaren Gerätes oder Kleinfahrzeuges vorgesehen. Beispielsweise kann die Gelenkverbindung 10 für die Führungsvorrichtung eines Rasenmähers oder Kinderwagens vorgesehen sein.

Die Gelenkverbindung 10 weist ein erstes Gelenkteil 12 und ein zweites Gelenkteil 14 auf. Das erste Gelenkteil 12 und das zweite Gelenkteil 14 sind relativ zueinander um eine Achse 44 drehbar. Außerdem sind das erste Gelenkteil 12 und das zweite Gelenkteil 14 in mehreren vorbestimmten Drehwinkeln zueinander arretierbar.

Das erste Gelenkteil 12 umfasst eine erste Halbschale 16 und eine erste Muffe 20. Dementsprechend umfasst das zweite Gelenkteil 14 eine zweite Halbschale 18 und eine zweite Muffe 22. Die beiden Muffen 20 und 22 sind jeweils zum Aufnehmen der Endbereiche der beiden langgestreckten Gegenstände vorgesehen. Im Inneren der ersten Halbschale 16 ist ein erstes Innenzahnrad 24 ausgebildet. Ebenso ist im Inneren der zweiten Halbschale 18 ein zweites Innenzahnrad 26 ausgebildet. Die beiden Innenzahnräder 24 und 26 sind rotationssymmetrisch bezüglich der Achse 44 angeordnet und weisen die gleiche Zähnung auf.

Weiterhin weist die Gelenkverbindung 10 ein Zahnrad 28 auf. Das Zahnrad 28 ist komplementär zum ersten Innenzahnrad 24 und zum zweiten Innenzahnrad 26 ausgebildet. In einem arretierten Zustand der Gelenkverbindung 10 ist das Zahnrad 28 sowohl mit dem ersten Innenzahnrad 24 als auch mit dem zweiten Innenzahnrad 26 in Eingriff. Dabei ist das Zahnrad 28 von den beiden Halbschalen 16 und 18 umschlossen. Das Zahnrad 28, das erste Innenzahnrad 24 und/oder das zweite Innenzahnrad 26 sind geometrisch so strukturiert, dass das erste Gelenkteil 12 und das zweite Gelenkteil 14 nur in den vorbestimmten Drehwinkeln zueinander arretierbar sind. Vorzugsweise ist der einstellbare Drehwinkelbereich zwischen dem ersten Gelenkteil 12 und dem zweiten Gelenkteil 14 begrenzt. In diesem konkreten Ausführungsbeispiel ist der einstellbare Drehwinkelbereich durch die Anordnung der Muffen 20 und 22 an der ersten Halbschale 16 bzw. zweiten Halbschale 18 begrenzt.

Die Gelenkverbindung 10 weist außerdem eine erste Schraubenfeder 36, eine zweite Schraubenfeder 38 und einen Drehknopf 30 auf. Die Längsachsen der ersten Schraubenfeder 36 und der zweiten Schraubenfeder 38 erstrecken sich entlang der Achse 44. Die zweite Halbschale 18 weist an ihrer Außenseite eine Ausnehmung 32 auf, in welcher der Drehknopf 30 angeordnet ist. Der Drehknopf 30 ist um die Achse 44 drehbar. Die erste Schraubenfeder 36 ist in der ersten Halbschale 16 angeordnet und zwischen dem Zahnrad 28 und der ersten Halbschale 16 eingeklemmt. Das Zahnrad 28 wird von der ersten Schraubenfeder 36 in das zweite Innenzahnrad 26 entlang der Achse 44 geschoben. Die zweite Schraubenfeder 38 ist in der Ausnehmung 32 der zweiten Halbschale 18 angeordnet und zwischen dem Drehknopf 30 und der zweiten Halbschale 18 eingeklemmt.

Die erste Halbschale 16, die erste Schraubenfeder 36, das Zahnrad 28 und die zweite Halbschale 18 sind mittels eines Bolzens 34, einer Beilagscheibe 40 und eines Sicherungsringes 42 miteinander verbunden. Anstelle des Bolzens 34 kann auch eine Schraube vorgesehen sein. Die Längsachse des Bolzens 34 erstreckt sich entlang der Achse 44. Der Bolzen 34 durchdringt die erste Halbschale 16, die erste Schraubenfeder 36, das Zahnrad 28 und die zweite Halbschale 18. In diesem konkreten Beispiel liegt ein Kopf des Bolzens 34 an der Außenseite der ersten Halbschale 16 an, während die Beilagscheibe 40 und der Sicherungsring 42 in der Ausnehmung 32 der zweiten Halbschale 18 angeordnet sind.

Innerhalb der Ausnehmung 32 der zweiten Halbschale 18 ist ein Gewinde 46 oder Gewindeabschnitt ausgebildet. Das Gewinde 46 bzw. der Gewindeabschnitt erstreckt sich entlang der inneren Mantelfläche der Ausnehmung 32. Der Drehknopf 30 ist mit dem Gewinde 46 bzw. Gewindeabschnitt in Eingriff, so dass durch eine Drehung um die Achse 44 der Drehknopf 30 entlang dieser Achse 44 verschoben wird. In diesem Ausführungsbeispiel wird durch eine Rechtsdrehung relativ zur zweiten Halbschale 18 bzw. zum zweiten Gelenkteil 14 der Drehknopf 30 entlang der Achse 44 gegen den Widerstand der zweiten Schraubenfeder 38 hin zur ersten Halbschale 16 bzw. zum ersten Gelenkteil 12 verschoben. Durch die Drehung und Verschiebung des Drehknopfes 30 wird das Zahnrad 28 aus dem zweiten Innenzahnrad 26 hinausgeschoben und in das erste Innenzahnrad 24 weiter hineingeschoben. Damit befindet sich das Zahnrad 28 nur noch mit dem ersten Innenzahnrad 24 in Eingriff und das zweite Gelenkteil 14 ist relativ zum ersten Gelenkteil 12 und zum Zahnrad 28 drehbar. In diesem entarretierten Zustand kann nun der Benutzer den Winkel zwischen den beiden Muffen 20 und 22 bzw. den darin eingeführten langgestreckten Gegenständen verstellen. Vorzugsweise ist der Drehknopf 30 zwischen dem arretierten und entarretierten Zustand drehbar.

Aufgrund der Zähnungen des Zahnrades 28 und des zweiten Innenzahnrades 26 sind nur bestimmte diskrete Winkel möglich. Optional können bestimmte Abschnitte der äußeren Mantelfläche des Zahnrades 26 und/oder der inneren Mantelfläche des zweiten Innenzahnrades 26 von den komplementären Zähnen abweichende Strukturen aufweisen, so dass nur ein bestimmter Winkelbereich zwischen den beiden Muffen 20 und 22 möglich ist.

In diesem konkreten Ausführungsbeispiel wird der Drehknopf 30 durch eine Rechtsdrehung relativ zur zweiten Halbschale 18 bzw. zum zweiten Gelenkteil 14 hin zur ersten Halbschale 16 bzw. zum ersten Gelenkteil 12 entlang der Achse 44 verschoben, wodurch der Drehknopf 30 weiter in die Ausnehmung 32 der zweiten Halbschale 18 eindringt. Alternativ dazu kann der Drehknopf 30 durch eine Drehung von der ersten Halbschale 16 bzw. dem ersten Gelenkteil 12 entlang der Achse 44 wegschoben werden, wodurch der Drehknopf 30 weiter aus der Ausnehmung 32 der zweiten Halbschale 18 hervorsteht. In diesem Fall würde das Zahnrad 28 durch die erste Schraubenfeder 36 aus dem ersten Innenzahnrad 24 hinausgeschoben und in das zweite Innenzahnrad 26 weiter hineingeschoben, so dass das zweite Gelenkteil 14 mit dem Zahnrad 28 relativ zum ersten Gelenkteil 12 drehbar wäre.

Das Gewinde 46 bzw. der Gewindeabschnitt ist in diesem konkreten Ausführungsbeispiel als ein sogenanntes Rechtsgewinde ausgebildet. Alternativ dazu kann das Gewinde 46 bzw. der Gewindeabschnitt auch als Linksgewinde ausgebildet sein. Wenn beispielsweise für eine Anwendung zwei zueinander gegenüber angeordnete Gelenkverbindungen 10 vorgesehen sind, kann die eine Gelenkverbindung 10 ein Rechtsgewinde und die andere Gelenkverbindung 10 ein Linksgewinde aufweisen, so dass die Drehrichtungen der beiden Drehknöpfe 30 zum Arretieren bzw. Entarretieren der Gelenkverbindungen 10 symmetrisch ausgerichtet sind.

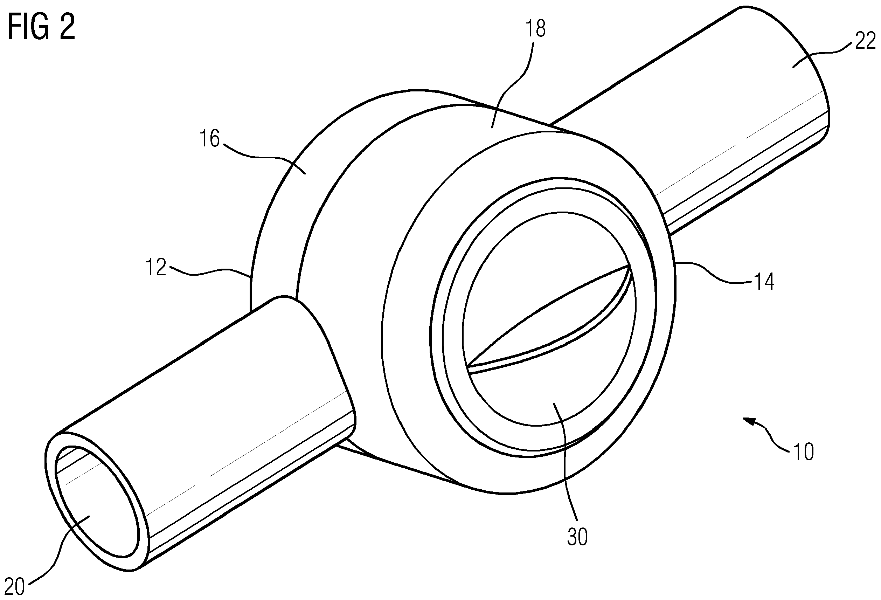

Figur 2 zeigt eine schematische Perspektivansicht der Gelenkverbindung 10 gemäß der bevorzugten Ausführungsform der Erfindung. Die Gelenkverbindung 10 ist als Verbindungsteil zwischen zwei langgestreckten Gegenständen vorgesehen. Die Muffen 20 und 22 zum Aufnehmen der beiden langgestreckten Gegenstände sind in Figur 2 um einen Winkel von 180° beabstandet.

Die beiden Halbschalen 16 und 18 sowie der Drehknopf 30 sind so ausgebildet und zusammengesetzt, dass sie zusammen eine im Wesentlichen zylindrische Form aufweisen. Die beiden Muffen 20 und 22 erstrecken sich von den Mantelflächen dieser zylindrischen Form nach außen. Weiterhin wirken die Muffen 20 und 22 als Anschläge, die den Drehwinkel zwischen dem ersten Gelenkteil 12 und dem zweiten Gelenkteil 14 begrenzen.

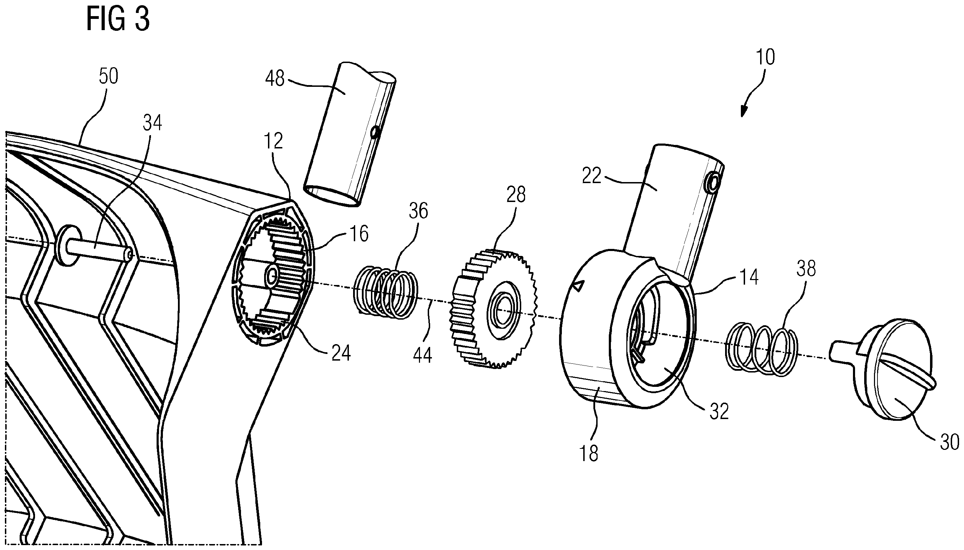

Figur 3 zeigt eine schematische Explosionsansicht der Gelenkverbindung 10 gemäß einer zweiten Ausführungsform der Erfindung. Bei der Gelenkverbindung 10 gemäß der zweiten Ausführungsform ist das erste Gelenkteil 12 in einem Gehäuse 50 integriert. Das Gehäuse 50 bildet einen Teil des handführbaren Gerätes oder Kleinfahrzeuges.

Die Gelenkverbindung 10 gemäß der zweiten Ausführungsform ist als ein Verbindungsteil zwischen einem langgestreckten Gegenstand 48 und dem Gehäuse 50 vorgesehen. In diesem Beispiel ist der langgestreckte Gegenstand 48 ein Rohr. Insbesondere ist die Gelenkverbindung 10 für eine Führungsvorrichtung eines handführbaren Gerätes oder Kleinfahrzeuges vorgesehen. Beispielsweise kann die Gelenkverbindung 10 für die Führungsvorrichtung eines Rasenmähers oder Kinderwagens vorgesehen sein.

Die Gelenkverbindung 10 weist das erste Gelenkteil 12 und das zweite Gelenkteil 14 auf. Das erste Gelenkteil 12 und das zweite Gelenkteil 14 sind relativ zueinander um die Achse 44 drehbar. Außerdem sind das erste Gelenkteil 12 und das zweite Gelenkteil 14 in mehreren vorbestimmten Drehwinkeln zueinander arretierbar.

Das erste Gelenkteil 12 umfasst die erste Halbschale 16, wobei im Inneren der ersten Halbschale 16 das erste Innenzahnrad 24 ausgebildet ist. Das erste Gelenkteil 12 gemäß der zweiten Ausführungsform ist ein integraler Bestandteil des Gehäuses 50. In diesem Beispiel ist das Gehäuse 50 mit dem ersten Gelenkteil 12 einstückig ausgebildet. Im Gegensatz zur ersten Ausführungsform weist das erste Gelenkteil 12 gemäß der zweiten Ausführungsform keine Muffe auf.

Das zweite Gelenkteil 14 gemäß der zweiten Ausführungsform ist im Wesentlichen mit dem der ersten Ausführungsform identisch. Somit umfasst das zweite Gelenkteil 14 die zweite Halbschale 18 und die Muffe 22. Die Muffe 22 ist zum Aufnehmen des Endbereichs des langgestreckten Gegenstandes vorgesehen. Ebenso ist im Inneren der zweiten Halbschale 18 ein zweites Innenzahnrad 26 ausgebildet, das in Figur 3 nicht dargestellt ist. Die beiden Innenzahnräder 24 und 26 weisen die gleiche Zähnung auf und sind rotationssymmetrisch bezüglich der Achse 44 angeordnet.

Weiterhin weist die Gelenkverbindung 10 das Zahnrad 28 auf. Das Zahnrad 28 ist komplementär zum ersten Innenzahnrad 24 und zum zweiten Innenzahnrad 26 ausgebildet. Im arretierten Zustand der Gelenkverbindung 10 ist das Zahnrad 28 sowohl mit dem ersten Innenzahnrad 24 als auch mit dem zweiten Innenzahnrad 26 in Eingriff. Dabei ist das Zahnrad 28 von den beiden Halbschalen 16 und 18 umschlossen. Das Zahnrad 28, das erste Innenzahnrad 24 und/oder das zweite Innenzahnrad 26 sind geometrisch so strukturiert, dass das erste Gelenkteil 12 und das zweite Gelenkteil 14 nur in den vorbestimmten Drehwinkeln zueinander arretierbar sind. Beispielsweise kann der einstellbare Drehwinkelbereich zwischen dem ersten Gelenkteil 12 und dem zweiten Gelenkteil 14 begrenzt sein.

Die Gelenkverbindung 10 weist außerdem die erste Schraubenfeder 36, die zweite Schraubenfeder 38 und den Drehknopf 30 auf. Die Längsachsen der ersten Schraubenfeder 36 und der zweiten Schraubenfeder 38 erstrecken sich entlang der gemeinsamen Achse 44. Die zweite Halbschale 18 weist an ihrer Außenseite die Ausnehmung 32 auf, in welcher der Drehknopf 30 angeordnet ist. Der Drehknopf 30 ist um die Achse 44 drehbar. Die erste Schraubenfeder 36 ist in der ersten Halbschale 16 angeordnet und zwischen dem Zahnrad 28 und der ersten Halbschale 16 eingeklemmt. Das Zahnrad 28 wird von der ersten Schraubenfeder 36 in das zweite Innenzahnrad 26 entlang der Achse 44 geschoben. Die zweite Schraubenfeder 38 ist in der Ausnehmung 32 der zweiten Halbschale 18 angeordnet und zwischen dem Drehknopf 30 und der zweiten Halbschale 18 eingeklemmt.

Die erste Halbschale 16, die erste Schraubenfeder 36, das Zahnrad 28 und die zweite Halbschale 18 sind mittels des Bolzens 34 miteinander verbunden. Anstelle des Bolzens 34 kann auch eine Schraube vorgesehen sein. Die Längsachse des Bolzens 34 erstreckt sich entlang der Achse 44. Der Bolzen 34 durchdringt die erste Halbschale 16, die erste Schraubenfeder 36, das Zahnrad 28 und die zweite Halbschale 18. In diesem konkreten Beispiel liegt der Kopf des Bolzens 34 an der Außenseite der ersten Halbschale 16 an, wobei die Außenseite der ersten Halbschale 16 sich in Inneren des Gehäuses befindet.

Durch die Drehung und Verschiebung des Drehknopfes 30 wird das Zahnrad 28 aus dem zweiten Innenzahnrad 26 hinausgeschoben und in das erste Innenzahnrad 24 weiter hineingeschoben. Damit befindet sich das Zahnrad 28 nur noch mit dem ersten Innenzahnrad 24 in Eingriff und das zweite Gelenkteil 14 ist relativ zum ersten Gelenkteil 12 und zum Zahnrad 28 drehbar. In diesem entarretierten Zustand kann nun der Benutzer den Winkel zwischen der Muffe 22 mit dem langgestreckten Gegenstand 48 einerseits und dem Gehäuse 50 andererseits verstellen. Vorzugsweise ist der Drehknopf 30 zwischen dem arretierten und entarretierten Zustand drehbar.

Aufgrund der Zähnungen des Zahnrades 28 und des zweiten Innenzahnrades 26 sind nur bestimmte diskrete Winkel möglich. Optional können bestimmte Abschnitte der äußeren Mantelfläche des Zahnrades 26 und/oder der inneren Mantelfläche des zweiten Innenzahnrades 26 von den komplementären Zähnen abweichende Strukturen aufweisen, so dass nur ein bestimmter Winkelbereich zwischen der Muffe 22 und dem Gehäuse möglich ist.

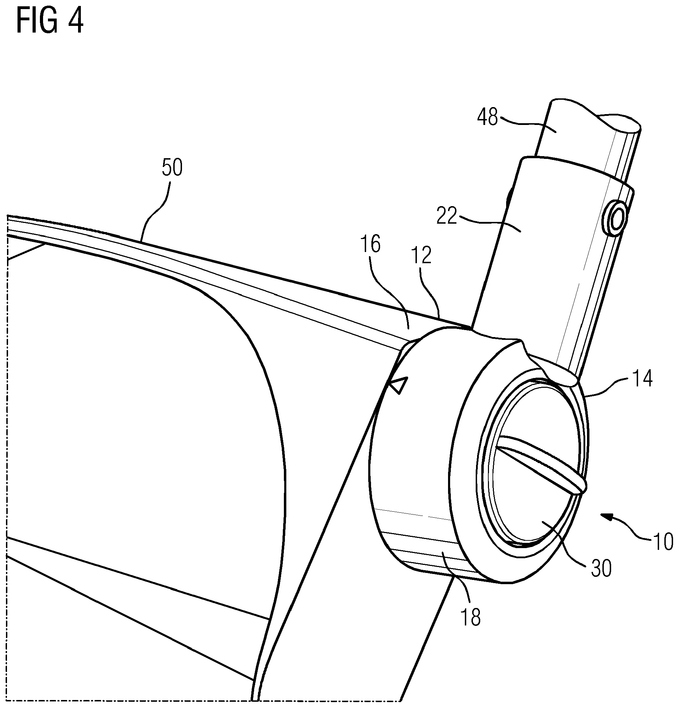

Figur 4 zeigt eine schematische Perspektivansicht der Gelenkverbindung gemäß der zweiten Ausführungsform der Erfindung. Die Gelenkverbindung 10 ist als Verbindungsteil zwischen dem langgestreckten Gegenstand 48 und dem Gehäuse vorgesehen. Die Halbschale 18 bildet einen Fortsatz des Gehäuses 50.

Die Gelenkverbindung 10 ist insbesondere für eine Führungsvorrichtung eines handführbaren Gerätes oder Kleinfahrzeuges vorgesehen. Beispielsweise kann die Gelenkverbindung 10 für die Führungsvorrichtung eines Rasenmähers oder Kinderwagens vorgesehen sein. Dabei kann der Rasenmäher oder Kinderwagen einen Bügel als Haltegriff oder Führungsgriff aufweisen, der über vorzugsweise zwei Gelenkverbindungen 10 und zwei Stangen mit dem eigentlichen Rasenmäher bzw. Kinderwagen verbunden ist. Die beiden Gelenkverbindungen 10 ermöglichen dabei eine optimale Einstellung des Bügels. Insbesondere lässt sich der Haltegriff oder Führungsgriff an die Körpergröße des Benutzers anpassen. Weiterhin lässt sich die Führungsvorrichtung mittels der Gelenkverbindungen 10 zusammenklappen, so dass das Gerät bzw. Kleinfahrzeug nur wenig Stauraum benötigt und einfach transportierbar ist. Außerdem ist die Gelenkverbindung 10 gemäß der Erfindung für den Benutzer einfach bedienbar. Schließlich lässt sich die erfindungsgemäße Gelenkverbindung 10 auf einfache Weise herstellen.

### Bezugszeichen

- 10: Gelenkverbindung
- 12: erstes Gelenkteil
- 14: zweites Gelenkteil
- 16: erste Halbschale
- 18: zweite Halbschale
- 20: erste Muffe
- 22: zweite Muffe
- 24: erstes Innenzahnrad
- 26: zweites Innenzahnrad
- 28: Zahnrad
- 30: Drehknopf
- 32: Ausnehmung
- 34: Bolzen
- 36: erste Schraubenfeder
- 38: zweite Schraubenfeder
- 40: Beilagscheibe
- 42: Sicherungsring
- 44: Drehachse
- 46: Gewinde
- 48: langgestreckter Gegenstand
- 50: Gehäuse

## Patentansprüche

1. Gelenkverbindung (10) zum drehbaren und feststellbaren Verbinden wenigstens eines langgestreckten Gegenstandes (48), insbesondere für ein handführbares Gerät oder Kleinfahrzeug, wobei die Gelenkverbindung (10) Folgendes aufweist:
- ein erstes Gelenkteil (12), das eine erste Halbschale (16) umfasst, wobei in der ersten Halbschale (16) ein erstes Innenzahnrad (24) ausgebildet ist,
- ein zweites Gelenkteil (14), das eine zweite Halbschale (18) und eine Muffe (22) umfasst, wobei in der zweiten Halbschale (16) ein zweites Innenzahnrad (26) ausgebildet ist, und wobei die Muffe (22) zum Aufnehmen des langgestreckten Gegenstandes (48) vorgesehen ist,
- ein Zahnrad (28), das komplementär zum ersten Innenzahnrad (24) und zum zweiten Innenzahnrad (26) ausgebildet und innerhalb der beiden zusammengefügten Halbschalen (16, 18) angeordnet ist,
- einen Drehknopf (30), der in oder an einer Außenseite der zweiten Halbschale (18) angeordnet und um eine Achse (44) drehbar und entlang dieser Achse (44) verschiebbar ist,
- eine erste Schraubenfeder (36), die zwischen der ersten Halbschale (16) und dem Zahnrad (28) angeordnet ist und das Zahnrad (28) entlang der Achse (44) gegen das zweite Innenzahnrad (26) drückt,
- eine zweite Schraubenfeder (38), die zwischen der zweiten Halbschale (18) und dem Drehknopf (30) angeordnet ist und der Verschiebung des Drehknopfes (30) entlang der Achse (44) in eine Ausnehmung (32) in der zweiten Halbschale (18) entgegenwirkt, und
- Verbindungsmittel (34, 40, 42), welche die erste Halbschale (16), die erste Schraubenfeder (36), das Zahnrad (28) und die zweite Halbschale (16) entlang der Achse (44) miteinander verbinden, wobei
- in einem arretierten Zustand das Zahnrad (28) mit dem ersten Innenzahnrad (24) und mit dem zweiten Innenzahnrad (26) in Eingriff ist, so dass das erste Gelenkteil (12) und das zweite Gelenkteil (14) fest miteinander verbunden sind, und wobei
- in einem entarretierten Zustand das Zahnrad (28) mit dem ersten Innenzahnrad (24) in Eingriff und vom zweiten Innenzahnrad (26) entkoppelt ist, so dass das erste Gelenkteil (12) und das zweite Gelenkteil (14) relativ zueinander drehbar sind;
- wobei der Drehknopf (30) in der Ausnehmung (32) im zentralen Bereich der zweiten Halbschale (18) angeordnet ist, **dadurch gekennzeichnet, dass**
in der zweiten Halbschale (18) ein Gewinde (46) oder ein Gewindeabschnitt ausgebildet ist, das bzw. der mit dem Drehknopf (30) in Eingriff ist, wobei das Gewinde (46) bzw. der Gewindeabschnitt die Verschiebung des Drehknopfes (30) entlang der Achse (44) aufgrund der Drehung des Drehknopfes (30) um die Achse (44) bewirkt.

2. Gelenkverbindung nach Anspruch 1,
**dadurch gekennzeichnet, dass**
die Verbindungsmittel einen Bolzen (34) oder eine Schraube, einen Sicherungsring (42) und/oder wenigstens eine Beilagscheibe (40) umfassen.

3. Gelenkverbindung nach Anspruch 1 oder 2,
**dadurch gekennzeichnet, dass**
durch die Zähnungen des Zahnrades (28), des ersten Innenzahnrades (24) und des zweiten Innenzahnrades (26) eine Anzahl diskreter vorbestimmter Winkel zwischen dem ersten Gelenkteil (12) und dem zweiten Gelenkteil (14) definiert ist.

4. Gelenkverbindung nach einem der vorhergehenden Ansprüche,
**dadurch gekennzeichnet, dass**
durch die Struktur der äußeren Umfangsfläche des Zahnrades (28) und/oder der inneren Umfangsflächen des ersten Innenzahnrades (24) und/oder des zweiten Innenzahnrades (26) ein vorbestimmter Winkelbereich zwischen dem ersten Gelenkteil (12) und dem zweiten Gelenkteil (14) definiert ist.

5. Gelenkverbindung nach einem der vorhergehenden Ansprüche,
**dadurch gekennzeichnet, dass**
das zweite Gelenkteil (14) mit der zweiten Halbschale (18) und der Muffe (22) einstückig oder zweiteilig ausgebildet ist, wobei vorzugsweise das zweite Gelenkteil (14), die zweite Halbschale (18) und/oder die Muffe (22) aus Kunststoff und/oder Metall hergestellt sind.

6. Gelenkverbindung nach einem der vorhergehenden Ansprüche,
**dadurch gekennzeichnet, dass**
das erste Gelenkteil (12) mit der ersten Halbschale (16) und dem ersten Innenzahnrad (24) ein oder mehrere Teile eines Gehäuses (50) für das handführbare Gerät oder Kleinfahrzeug oder für eine Komponente des handführbaren Gerätes oder Kleinfahrzeuges bildet bzw. bilden.

7. Gelenkverbindung nach Anspruch 6,
**dadurch gekennzeichnet, dass**
das Gehäuse (50) mit dem ersten Gelenkteil (12), der ersten Halbschale (16) und dem ersten Innenzahnrad (24) einstückig oder mehrteilig ausgebildet ist, wobei vorzugsweise das Gehäuse (50), das erste Gelenkteil (12), die erste Halbschale (16) und/oder das erste Innenzahnrad (24) aus Kunststoff und/oder Metall hergestellt sind.

8. Gelenkverbindung nach einem der Ansprüche 1 bis 5,
**dadurch gekennzeichnet, dass**
das erste Gelenkteil (12) eine weitere Muffe (20) umfasst, die zum Aufnehmen eines weiteren langgestreckten Gegenstandes vorgesehen ist, so dass die Gelenkverbindung zum drehbaren und feststellbaren Verbinden zweier langgestreckter Gegenstände vorgesehen ist.

9. Gelenkverbindung nach Anspruch 8,
**dadurch gekennzeichnet, dass**
das erste Gelenkteil (12) mit der ersten Halbschale (16) und der weiteren Muffe (20) einstückig oder zweiteilig ausgebildet ist, wobei vorzugsweise das erste Gelenkteil (12), die erste Halbschale (16) und/oder die weitere Muffe (20) aus Kunststoff und/oder Metall hergestellt sind.

10. Gelenkverbindung nach einem der vorhergehenden Ansprüche,
**dadurch gekennzeichnet, dass**
das Zahnrad (28) und/oder der Drehknopf (30) aus Kunststoff und/oder Metall hergestellt sind.

11. Führungsvorrichtung für ein handführbares Gerät oder Kleinfahrzeug, die wenigstens einen langgestreckten Gegenstand aufweist, der mittels einer Gelenkverbindung (10) verstellbar verbunden oder verbindbar ist,
**dadurch gekennzeichnet, dass**
die Führungsvorrichtung wenigstens eine Gelenkverbindung (10) nach einem der Ansprüche 1 bis 10 aufweist.

12. Handführbares Gerät mit wenigstens einem langgestreckten Gegenstand, der mittels einer Gelenkverbindung (10) verstellbar verbunden oder verbindbar ist,
**dadurch gekennzeichnet, dass**
das handführbare Gerät wenigstens eine Gelenkverbindung (10) nach einem der Ansprüche 1 bis 10 aufweist.

13. Handführbares Kleinfahrzeug mit wenigstens einem langgestreckten Gegenstand (48), der mittels einer Gelenkverbindung (10) verstellbar verbunden oder verbindbar ist,
**dadurch gekennzeichnet, dass**
das handführbare Gerät wenigstens eine Gelenkverbindung (10) nach einem der Ansprüche 1 bis 10 aufweist.

## Claims

1. An articulated connection (10) for rotatably and lockably connecting at least one elongate object (48), in particular for a manual device or small vehicle, wherein the articulated connection (10) comprises the following:
- a first articulated part (12), which comprises a first half shell (16), wherein in the first half shell (16) a first internal gearwheel (24) is formed,
- a second articulated part (14), which comprises a second half shell (18) and a sleeve (22), wherein in the second half shell (16) a second internal gearwheel (26) is formed, and wherein the sleeve (22) is provided for receiving the elongate object (48),
- a gearwheel (28), which is formed complementary to the first internal gearwheel (24) and the second internal gearwheel (26) and disposed between the two assembled half shells (16, 18),
- a rotary knob (30), disposed in or on an outer side of the second half shell (18) and rotatable about an axis (44) and displaceable along this axis (44),
- a first coil spring (36), which is disposed between the first half shell (16) and the gearwheel (28) and which presses the gearwheel (28) along the axis (44) against the second internal gearwheel (26),
- a second coil spring (38), which is disposed between the second half shell (18) and the rotary knob (30) and which counteracts the displacement of the rotary knob (30) along the axis (44) in a recess (32) in the second half shell (18), and
- a connecting means (34, 40, 42) which interconnects the first half shell (16), the first coil spring (36), the gearwheel (28) and the second half shell (16) along the axis (44), wherein
- in a locked state, the gearwheel (28) is engaged with the first internal gearwheel (24) and with the second internal gearwheel (26), so that the first articulated part (12) and the second articulated part (14) are firmly connected, and wherein
- in an unlocked state, the gearwheel (28) is engaged with the first internal gearwheel (24) and decoupled from the second internal gearwheel (26), so that the first articulated part (12) and the second articulated part (14) are rotatable relative to each other,
- wherein the rotary knob (30) is disposed in the recess (32) in the central region of the second half shell (18),
**characterised in that**
in the second half shell (18) a thread (46) or a thread portion is formed which engages with the rotary knob (30), wherein the thread (46) or the thread portion causes the displacement of the rotary knob (30) along the axis (44) due to the rotation of the rotary knob (30) about the axis (44).

2. The articulated connection according to claim 1,
**characterised in that**
the connecting means comprise a bolt (34) or a screw, a securing ring (42) and/or at least one washer (40).

3. The articulated connection according to claim 1 or 2,
**characterised in that**
by the teeth of the gearwheel (28), the first internal gearwheel (24) and the second internal gearwheel (26), a number of discrete predetermined angles is defined between the first articulated part (12) and the second articulated part (14).

4. The articulated connection according to any one of the preceding claims,
**characterised in that**
by the structure of the outer peripheral surface of the gearwheel (28) and/or the inner peripheral surfaces of the first internal gearwheel (24) and/or the second internal gearwheel (26), a predetermined angle region is defined between the first articulated part (12) and the second articulated part (14).

5. The articulated connection according to any one of the preceding claims,
**characterised in that**
the second articulated part (14) is formed in one piece or two parts with the second half shell (18) and the sleeve (22), wherein preferably the second articulated part (14), the second half shell (18) and/or the sleeve (22) are made of plastic and/or metal.

6. The articulated connection according to any one of the preceding claims,
**characterised in that**
the first articulated part (12) with the first half shell (16) and the first internal gearwheel (24) forms or form one or a plurality of parts of a housing (50) for the manual device or small vehicle or for a component of the manual device or small vehicle.

7. The articulated connection according to claim 6,
**characterised in that**
the housing (50) is formed in one piece or a plurality of parts with the first articulated part (12), the first half shell (16) and the first internal gear (24), wherein preferably the housing (50), the first articulated part (12), the first half shell (16) and/or the first internal gearwheel (24) are made of plastic and/or metal.

8. The articulated connection according to any one of claims 1 to 5,
**characterised in that**
the first articulated part (12) comprises a further sleeve (20), which is provided for receiving a further elongate object, so that the articulated connection is provided for the rotatable and lockable connection of two elongate objects.

9. The articulated connection according to claim 8,
**characterised in that**
the first articulated part (12) is formed in one piece or two parts with the first half shell (16) and the further sleeve (20), wherein preferably the first articulated part (12), the first half shell (16) and/or the further sleeve (20) are made of plastic and/or metal.

10. The articulated connection according to any one of the preceding claims,
**characterised in that**
the gearwheel (28) and/or the rotary knob (30) are made of plastic and/or metal.

11. Guide equipment for a manual device or small vehicle, which comprises at least one elongate object, which is adjustably connected or connectable by means of an articulated connection (10),
**characterised in that**
the guide equipment has at least one articulated connection (10) according to any one of claims 1 to 10.

12. A manual device with at least one elongate object, which is adjustably connected or connectable by means of an articulated connection (10),
**characterised in that**
the manual device has at least one articulated connection (10) according to any one of claims 1 to 10.

13. A manual small vehicle with at least one elongate object (48), which is adjustably connected or connectable by means of an articulated connection (10),
**characterised in that**
the manual device has at least one articulated connection (10) according to any one of claims 1 to 10.

## Revendications

1. Liaison articulée (10) visant à connecter en rotation et de manière perceptible au moins un objet allongé (48), notamment pour un appareil portatif ou un petit véhicule, la liaison articulée (10) présentant les éléments suivants :
- une première pièce articulée (12) qui comprend une première demi-coque (16), un premier engrenage interne (24) étant formé dans la première demi-coque (16),
- une deuxième pièce articulée (14) qui comprend une deuxième demi-coque (18) et un manchon (22), un deuxième engrenage interne (26) étant formé dans la deuxième demi-coque (16) et le manchon (22) étant prévu pour accueillir l'objet allongé (48),
- un engrenage (28) conçu de manière complémentaire au premier engrenage interne (24) et au deuxième engrenage interne (26) et agencé à l'intérieur des deux demi-coques (16,18) assemblées,
- un bouton rotatif (30) disposé dans le côté extérieur ou sur le côté extérieur de la deuxième demi-coque (18) et pouvant être déplacé autour d'un axe (44) et le long de cet axe (44),
- un premier ressort hélicoïdal (36) disposé entre la première demi-coque (16) et l'engrenage (28) et qui sollicite l'engrenage (28) le long de l'axe (44) contre le deuxième engrenage interne (26),
- un deuxième ressort hélicoïdal (38) disposé entre la deuxième demi-coque (18) et le bouton rotatif (30) et qui contrecarre le déplacement du bouton rotatif (30) le long de l'axe (44) dans un évidement (32) dans la deuxième demi-coque (18), et
- moyen de connexion (34, 40,42), lequel relie la première demi-coque (16), le premier ressort hélicoïdal (36), l'engrenage (28) et la deuxième demi-coque (16) le long de l'axe (44),
dans lequel
- dans un état verrouillé, l'engrenage (28) est en prise avec le premier engrenage interne (24) et avec le deuxième engrenage interne (26), de sorte que la première pièce articulée (12) et la deuxième pièce articulée (14) sont reliées ensemble de manière fixe, et dans lequel
- dans un état déverrouillé, l'engrenage (28) est en prise avec le premier engrenage interne (24) et découplé du deuxième engrenage interne (26) de sorte que la première pièce articulée (12) et la deuxième pièce articulée (14) peuvent tourner l'une par rapport à l'autre ;
- dans lequel le bouton rotatif (30) est disposé dans l'évidement (32) dans la plage centrale de la deuxième demi-coque (18),
**caractérisé en ce que**
- dans la deuxième demi-coque (18), un filetage (46) ou une section de filetage en prise avec le bouton rotatif (30) est conçu(e), le filetage (46) ou la section filetée entraînant le déplacement du bouton rotatif (30) le long de l'axe (44) dû la rotation du bouton rotatif (30) autour de l'axe (44).

2. Liaison articulée selon la revendication 1,
**caractérisée en ce que**
les moyens de connexion comprennent un boulon (34) ou une vis, une bague de blocage (42) et/ou au moins une rondelle plate (40).

3. Liaison articulée selon la revendication 1 ou 2,
**caractérisée en ce que**
grâce aux dentures de l'engrenage (28), du premier engrenage interne (24) et du deuxième engrenage interne (26), un certain nombre d'angles prédéterminés discrets est défini entre la première pièce articulée (12) et la deuxième pièce articulée (14)

4. Liaison articulée selon l'une quelconque des revendications précédentes,
**caractérisée en ce que**
grâce à la structure de la surface circonférentielle externe de l'engrenage (28) et/ou des surfaces circonférentielles internes du premier engrenage interne (24) et/ou du deuxième engrenage interne (26), une plage angulaire prédéterminée est définie entre la première pièce articulée (12) et la deuxième pièce articulée (14).

5. Liaison articulée selon l'une quelconque des revendications précédentes,
**caractérisée en ce que**
la deuxième pièce articulée (14) est formée d'une seule pièce ou de deux pièces avec la deuxième demi-coque (18) et le manchon (22), la deuxième pièce articulée (14), la deuxième demi-coque (18) et/ou le manchon (22) étant de préférence fabriqués en matière plastique et/ou en métal.

6. Liaison articulée selon l'une quelconque des revendications précédentes,
**caractérisée en ce que**
la première pièce articulée (12) avec la première demi-coque (16) et le premier engrenage interne (24) forme ou forment une ou plusieurs parties d'un logement (50) pour l'appareil portatif ou petit véhicule ou pour un composant de l'appareil portatif.

7. Liaison articulée selon la revendication 6,
**caractérisée en ce que**
le boîtier (50) avec la première pièce articulée (12), la première demi-coque (16) et le premier engrenage interne (24) est formé d'une seule pièce ou de plusieurs pièces, le boîtier (50), la première pièce articulée (12), la première demi-coque (16) et/ou le premier engrenage interne (24) étant de préférence fabriqués en matière plastique et/ou en métal.

8. Liaison articulée selon l'une quelconque des revendications 1 à 5,
**caractérisée en ce que**
la première pièce articulée (12) comprend un manchon (20) supplémentaire prévu pour accueillir un objet en longueur supplémentaire, de telle sorte que la liaison articulée est prévue pour relier en rotation et de manière perceptible un deuxième objet en longueur.

9. Liaison articulée selon la revendication 8,
**caractérisée en ce que**
la première pièce articulée (12) est formée d'une seule pièce ou de plusieurs pièces avec la première demi-coque (16) et le manchon (20) supplémentaire, la première liaison articulée (12), la première demi-coque (16) et/ou le manchon (20) supplémentaire étant fabriqué(es) en matière plastique et/ou en métal.

10. Liaison articulée selon l'une quelconque des revendications précédentes,
**caractérisée en ce que**
l'engrenage (28) et/ou le bouton rotatif (30) sont fabriqués en matière plastique et/ou en métal.

11. Dispositif de guidage pour un objet portatif ou petit véhicule présentant au moins un objet en longueur, relié ou pouvant être relié à l'aide d'une liaison articulée (10),
**caractérisée en ce que**
le dispositif de guidage présente au moins une liaison articulée (10) selon l'une des revendications 1 à 10.

12. Appareil portatif avec au moins un objet en longueur, relié ou pouvant être relié à l'aide d'une liaison articulée (10),
**caractérisé en ce que**
l'appareil portatif présente au moins une liaison articulée (10) selon l'une des revendications 1 à 10.

13. Appareil portatif avec au moins un objet en longueur (48), relié ou pouvant être relié à l'aide d'une liaison articulée (10),
**caractérisé en ce que**
l'appareil portatif présente au moins une liaison articulée (10) selon l'une des revendications 1 à 10.
